Europäisches Patentamt

European Patent Office

Office européen des brevets

(11) Veröffentlichungsnummer: **0 308 530**
**A1**

## (12) EUROPÄISCHE PATENTANMELDUNG

(21) Anmeldenummer: **87113948.1**

(22) Anmeldetag: **23.09.87**

(51) Int. Cl.⁴: **F28F 13/08 , B01D 53/26**

(43) Veröffentlichungstag der Anmeldung:
**29.03.89 Patentblatt 89/13**

(84) Benannte Vertragsstaaten:
**AT BE CH DE ES FR GB GR IT LI LU NL SE**

(71) Anmelder: **VIA Gesellschaft für**
**Verfahrenstechnik mbH**
**Heerdter Lohweg 63-71**
**D-4000 Düsseldorf 11(DE)**

(72) Erfinder: **Schlensker, Herbert, Dipl.-Ing.**
**Grundermühlenweg 24**
**D-5090 Leverkusen 3(DE)**
Erfinder: **Burk, Jürgen**
**Rottgärten 10**
**D-4000 Düsseldorf(DE)**

(74) Vertreter: **Stratmann, Ernst, Dr.-Ing.**
**Schadowplatz 9**
**D-4000 Düsseldorf 1(DE)**

(54) **Rohrbündelwärmetauscher.**

(57) Es wird ein Rohrbündelwärmetauscher (10), der insbesondere für Drucklufttrockner eingesetzt werden soll, beschrieben, der aus einem im wesentlichen zylindrischen Gehäuse (12) besteht, in dem ein (oder mehrere) Rohrbündel vorgesehen ist, wobei die Rohrenden der einzelnen Rohre (14) des Wärmetauschers (10) von Halteeinrichtungen (16) umgriffen sind. Die Wärmetauscherrohre (14) des Rohrbündels enthalten jeweils einen Verdrängerkörper (46), der das Lumen des Rohres (14) über seine im wesentlichen ganze axiale Länge auf einen annähernd ringförmigen Bereich (48) angrenzend zur Rohrinnenfläche oder auf um den Innenumfang des Rohres (14) annähernd gleichmäßig verteilte Teilbereiche verringert.

Fig.1.

Fig.3.

## Rohrbündelwärmetauscher

Die Erfindung betrifft einen Rohrbündelwärmetauscher, insbesondere für Drucklufttrockner o. dgl., bestehend aus einem im wesentlichen zylindrischen Gehäuse, in dem ein oder mehrere Rohrbündel vorgesehen sind, wobei die Rohrenden der einzelnen Wärmetauscherrohre der Rohrbündel von Halteeinrichtungen umgriffen sind.

Ein derartiger Rohrbündelwärmetauscher ist bereits aus der von der Anmelderin stammenden DE-OS 36 01 588 bekannt.

Aus einer Produktinformation der Fa. VDM Halbzeuge und Systemtechnik Gmbh mit dem Druckvermerk A-623184-02 ist bekannt, bei Verdampfern zur Optimierung der Kühlmittelverteilung in den Verdampferrohren die Verdampferrohre stehend anzuordnen und in ihnen sogenannte Verdrängerkörper einzubauen, die so dimensioniert sind, daß sie über die gesamte Rohrlänge einen bestimmten Druckabfall und an jeder Stelle des Rohres eine möglichst guten Wärmeübergang ermöglichen.

Durch die Verdrängerkörper wird die Strömungsgeschwindigkeit in den Rohren erhöht, ohne daß der Rohrdurchmesser und damit die wirksame Wärmetauscherfläche reduziert werden müßte. Durch die höhere Strömungsgeschwindigkeit verringern sich die Probleme, die z. B. durch Blasensieden des Kühlmittels entstehen, außerdem wird die mittlere Entfernung des Kühlflüssigkeitsvolumens von der austauschenden Rohrwandung reduziert, da der innere Bereich (Kernbereich) des Rohres mit seiner großen Entfernung von der Rohrwandung nicht von Kühlflüssigkeit, sondern von dem Verdrängerkörper eingenommen wird.

Wie die Verdrängerkörper in den einzelnen Verdampferrohren angeordnet werden, wird in dieser Druckschrift nicht näher dargestellt.

Aufgabe der Erfindung ist es, besonders günstige Lösungsmöglichkeiten für die Anordnung von Verdrängerkörpern in den einzelnen Rohren von Rohrbündelwärmetauschern zu liefern, und insbesondere auch eine noch günstigere Gestaltung zu verwirklichen, bei der das Problem des Hängenbleibens von Dampfblasen an den Innenwänden der Wärmetauscherrohre noch weiter vermindert wird. Außerdem soll eine besonders günstige Drucklufttrocknerkonstruktion unter Anwendung von Rohrbündelwärmetauschern mit ein Verdrängungsrohr enthaltenen Wärmetauscherrohren geschaffen werden.

Gelöst wird die Aufgabe dadurch, daß die Wärmetauscherrohre des einen Rohrbündels (oder, bei mehreren Rohrbündeln, die Wärmetauscherrohre zumindest eines der Rohrbündel) jeweils einen Verdrängerkörper enthalten, der das Lumen des Wärmetauscherrohres über seine im wesentlichen ganze axiale Länge auf einen annähernd ringförmigen Bereich angrenzend zur Rohrwand oder auf um den Innenumfang des Rohres annähernd gleichmäßig verteilte Teilbereiche verringert.

Durch diese Maßnahme wird erreicht, daß das Kühlmittel mit seinem ganzen den einzelnen Rohren zugeführten Volumen stets nahe der Wärmetauscherrohroberfläche ist, so daß der Wärmeleitwiderstand der Flüssigkeit selbst keine wesentliche Rolle mehr spielt. Durch die bei gleichem Kühlmitteldurchsatz in Folge der Verdrängerkörper erreichbare höhere Strömungsgeschwindigkeit verringert sich auch die Gefahr des Hängenbleibens von Dampfblasen des Kühlmittels, welche Dampfblasen den Wärmübergangswiderstand drastisch erhöhen können. Beim Stand der Technik sind keine Maßnahmen dargestellt, die sicherstellen, daß über die gesamte axiale Länge der Rohre tatsächlich auch ein annähernd ringförmiger Bereich sich ergibt, oder daß um den Innenumfang des Wärmetauschrohres annähernd gleichmäßig verteilte Teilbereiche gebildet sind. Diese letztgenannten Merkmale erhöhen den Wärmeübergangswirkungsgrad noch weiter, da sie die Bereiche mit sehr geringer Strömungsgeschwindigkeit ganz beseitigen oder auf so kleine gleichmäßig verteilte Bereiche beschränkt, daß der Einfluß auf den Gesamtwirkungsgrad der Wärmeübertragung vernachlässigbar bleibt, weil stets nahe dieser Stellen Bereiche mit hoher Strömungsgeschwindigkeit und damit guten Wärmeübergangswerten vorhanden sind, die kompensierend wirksam werden.

Gemäß einer weiteren Ausführungsform der Erfindung ist der Verdrängerkörper von einem Rohr gebildet, dessen Außendurchmesser kleiner als der Innendurchmesser des Wärmetauscherrohres ist und dessen Lumen an zumindest einer Stelle verschlossen ist. Den Verdrängerkörper aus Rohrmaterial zu fertigen, statt aus massivem Material, verringert die Materialkosten und das Gewicht der Anordnung. Das offenbleibende Lumen des Verdrängerrohrs kann sich mit Kühlmittel oder mit Kühlmitteldampf füllen, was für die Wirkungsweise der Anordnung aber irrelevant ist, da es lediglich darauf ankommt, eine als "Nebenschluß" wirkende Strömung durch das Verdrängerrohr zu verhindern.

Zweckmäßig ist es, bei im wesentlichen senkrecht angeordneten Rohren das Verdrängerrohr an seinem einen (vorzugsweise oberen) Ende durch einfaches Breitdrücken zu verschließen. Der Vorteil dieser Maßnahme ist der, daß kein zusätzliches Material erforderlich ist, daß keine Lötarbeiten notwendig werden und daß gleichzeitig eine Durchmesservergrößerung sich ergibt, die eine zusätzliche Sicherungseinrichtung gegen ein Verrutschen des Verdrängerrohrs im Wärmetauscherrohr darstellt.

Um die möglichst gleichförmige radiale Verteilung der Kühlflüssigkeit an der inneren Oberfläche des Wärmetauscherrohres zu erreichen, können verschiedene Maßnahmen vorgesehen werden. Gemäß einer Ausführungsform ist das Verdrängerrohr, alternativ das Wärmetauscherrohr, oder auch beide Rohre, mit einer riefenartigen Oberflächenstruktur versehen, beispielsweise durch drei (oder auch mehr) axial sich erstreckende Eindrückungen des Wärmetauscherrohres oder riefenartige Vorsprünge des Verdrängerrohrs. Auch noppenartige Vorsprünge, die entweder von der äußeren Oberfläche des Verdrängerrohrs ausgehen oder von der inneren Oberfläche des Wärmetauscherrohrs, können einen annähernd ringförmigen Bereich über die gesamte axiale Länge der mit Verdrängerrohr versehenen Wärmetauscherrohre sicherstellen.

Eine andere Alternative ist die, dem Wärmetauscherrohr eine gedrallte Oberflächenstruktur zu geben, wie sie aus dem Bereich der Ölkühlung an sich bekannt ist. Durch die gedrallte Oberflächenstruktur werden vorzugsweise drei Teilbereiche (anstelle eines ringförmigen Bereichs) geschaffen, die gleichmäßig - im Abstand von jeweils 120° - über den Radialumfang des Wärmetauscherrohres verteilt sind und die die Oberfläche des Wärmetauscherrohres - bezogen auf ein glattes Rohr - um bis zu 30 % vergrößern können. Ein weiterer Vorteil dieser gedrallten Oberflächenstruktur ist der, daß in der Kühlflüssigkeit Wirbeleffekte entstehen, die zusätzlich dazu beitragen, daß sich Blasen nicht an der Oberfläche des Wärmetauscherrohres festsetzen.

Zweckmäßig ist, die Drallung am Wärmetauscherrohr derart vorzunehmen, daß ein inneres Lumen frei bleibt, das gerade ausreicht, ein eine glatte Oberfläche aufweisendes Verdrängerrohr aufzunehmen. Auf diese Weise wird einerseits eine weitgehende Trennung der Teilbereiche vorgenommen, so daß eine weitgehend gleichmäßige Flüssigkeitsverteilung in diesen Teilbereichen erreicht wird, andererseits wird ein Vibrieren des Verdrängungsrohres bei bestimmten Betriebszuständen verhindert, andererseits ist die Herstellung des mit Verdrängerrohr versehenen Wärmetauscherrohres gleichwohl durch einfaches Einschieben des Verdrängerrohres in ein gedralltes Rohr möglich, mit anschließendem Breitquetschen beispielsweise des oberen Endes des Verdrängerrohres, so daß die Herstellungskosten extrem niedrig bleiben, da praktisch mit Meterware gearbeitet werden kann.

In weiteren Unteransprüchen werden konstruktive Details bezüglich der gedrallten Rohre beansprucht.

Die Erfindung wird nachfolgend anhand von Ausführungsbeispielen näher erläutert, die in den Zeichnungen dargestellt sind.

Es zeigt:

Fig. 1 in einer teilweise geschnittenen Seitenansicht das obere Ende eines Rohrbündelwärmetauschers mit den erfindungsgemäßen, einen Verdrängungskörper aufweisenden Wärmetauscherrohren;

Fig. 2 in einer ähnlichen Ansicht wie Fig. 1 das untere Ende des Rohrbündelwärmetauschers der Fig. 1;

Fig. 3 in einer vergrößerten Detaildarstellung das obere Ende eines im Rohrbündelwärmetauschers angeordneten mit Verdrängerrohr versehenen Wärmetauscherrohres;

Fig. 4 in einer noch stärker vergrößerten, teilweise geschnittenen Seitenansicht einen erfindungsgemäß ausgestalteten Verdrängungskörper mit Form eines ein breitgedrücktes oberes Ende aufweisenden Rohres;

Fig. 5 eine Ansicht von oben auf das breitgedrückte Ende des Rohres gemäß Fig. 4;

Fig. 6 die Darstellung eines gedrallten Wärmetauscherrohres, in das ein Verdrängungsrohr gemäß Fig. 4 und 5 eingeschoben werden kann;

Fig. 7 eine vergrößerte Schnittansicht entlang der Linie C-D der Fig. 6

Fig. 8 eine vergrößerte Schnittansicht entlang der Pfeile A-B der Fig. 6.

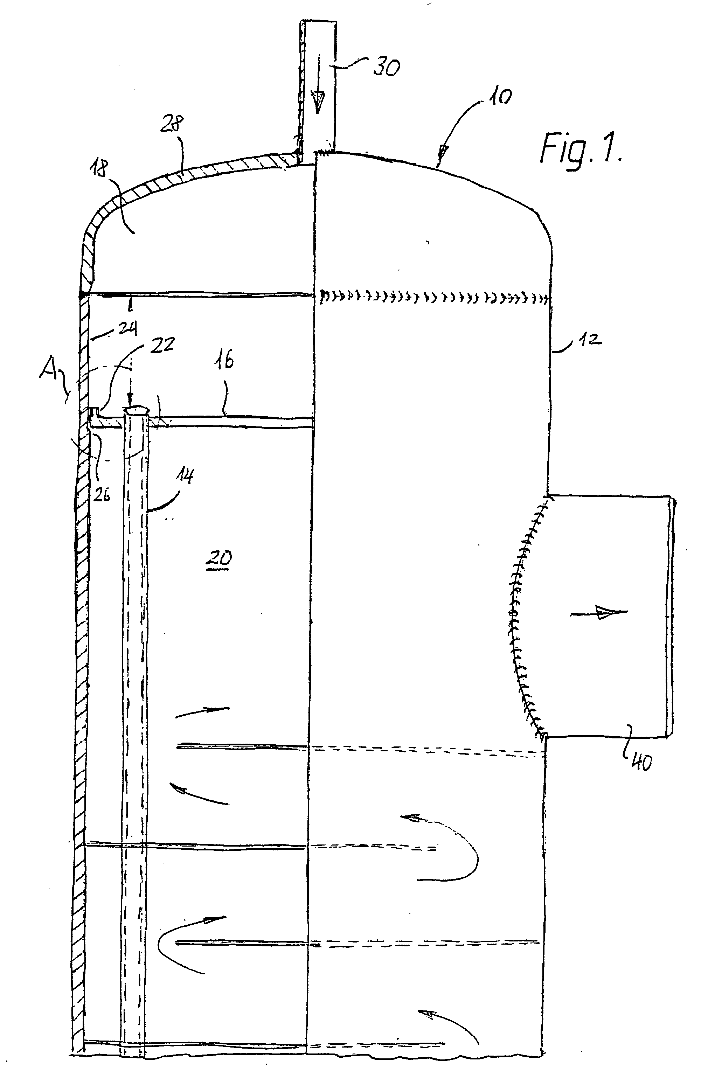

In Fig. 1 ist in einer teilweise geschnittenen Seitenansicht das obere Ende eines Rohrbündelwärmetauschers 10 dargestellt, bestehend aus einem im wesentlichen zylindrischen Gehäuse 12, in dem aus Wärmetauscherrohren 14 aufgebaute Rohrbündel angeordnet sind, wobei in Fig. 1 nur ein Wärmetauscherrohr dargestellt ist. Die Wärmetauscherrohre 14 werden von einer plattenförmigen Halteeinrichtung 16 umgriffen, welche Platte 16 einerseits die Wärmetauscherrohre 14 an ihren oberen Enden hält und gleichzeitig dicht umschließt. Die Platte 16 teilt das Gehäuse 12 des Rohrbündelwärmetauschers 10 in einen Kühlmittelzufuhrraum 18 und einen Druckluftraum 20 und ist in geeigneter Weise, beispielsweise mittels einer umbördelten Kante 22 an der Innenwand 24, die hier noch eine durch Innendurchmesservergrößerung entstandenen Absatz 26 bilden kann, gehalten, beispielsweise durch Verkleben oder Verschweißen. Die Zufuhr des Kühlmittels erfolgt über ein im Dom 28 des Gehäuses 12 angeordnetes Zufuhrrohr 30.

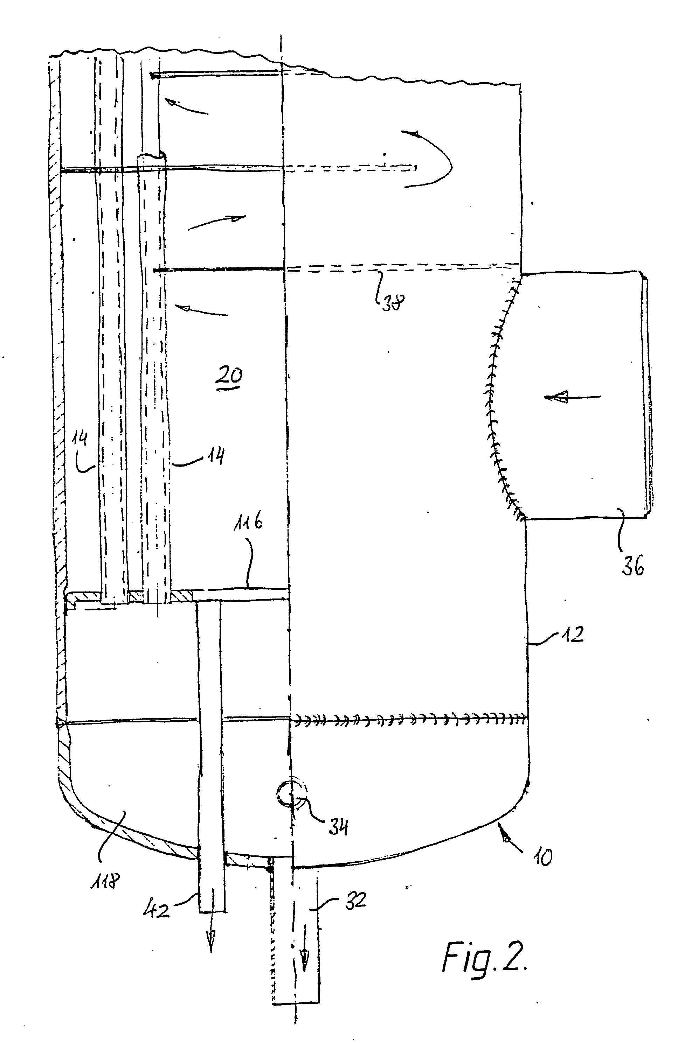

In Fig. 2 ist das untere Ende des Rohrbündelwärmetauschers 10 zu erkennen, wobei in ähnlicher Weise wie am oberen Ende eine plattenförmige Halteeinrichtung 116 die unteren Enden der Wärmetauscherrohre 14 dicht umschließt und in analoger Weise an der Innenfläche des zylindrischen Gehäuses 12 befestigt ist. Auch trennt die Platte 116 den Druckluftraum 20 von einem Kühlmittelabfuhrraum 118, von dem das Kühlmittel über einen Abzugsstutzen 32 abgezogen werden kann, um nach entsprechendem erneutem Wärmeenergieentzug in einem Kreislauf am Zufuhrrohr 30 wieder zugeführt zu werden.

Zur Steuerung des Kühlmittelumlaufes kann eine Sensoreinrichtung dienen, die die Temperatur (oder den Druck) des im Kühlmittelabfuhrraum 118 sich sammelnden Kühlmittels aufweist, wobei ein derartiger Sensor über einen Durchbruch 34 in das Gehäuse eingeschoben werden kann. Zu trocknende Druckluft wird über den Druckluftzufuhrstutzen 36 in den Druckluftraum 20 eingeführt und strömt, durch wechselseitig angeordnete Umlenkplatten 38 meanderförmig hin- und hergeleitet, in Gegenstromrichtung zur Kühlmittelströmungsrichtung nach oben und wird dabei durch die Oberfläche der von Kühlmittel durchflossenen Wärmetauscherrohre 14 bis auf eine Temperatur von nahe 0° C bei Austritt aus dem Druckluftabzugsstutzen 40 abgekühlt. In der Druckluft enthaltende Feuchtigkeit kondensiert infolge der Temperaturerniedrigung und schlägt sich auf den Außenflächen der Wärmetauscherrohre 14 sowie auf den Umlenkplatten 38 und den Innenwänden des Gehäuses 12 nieder und läuft nach unten bis zur Platte 116, und wo sie mittels nicht näher dargestellter Kondensatableiteinrichtungen über ein Rohr 42 abgezogen werden kann.

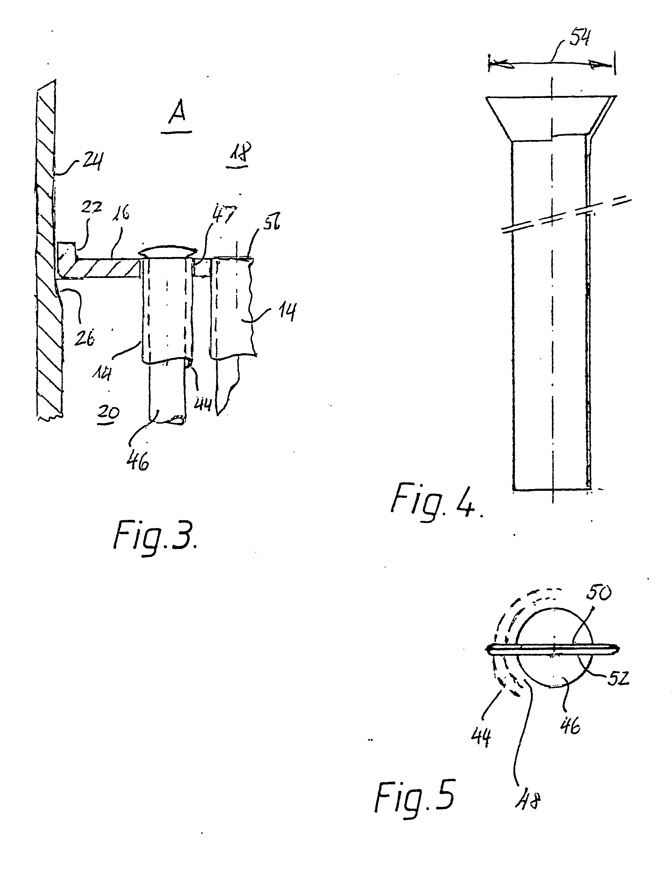

Es sei nun näher auf die Konstruktion der Wärmetauscherrohre 14 eingegangen, die aus den Fig. 3 bis 8 deutlich wird. Fig. 3 zeigt eine vergrößerte Ansicht des Bereiches A der Fig. 1 und läßt erkennen, daß die plattenförmige Halteeinrichtung oder Rohrplatte 16 ein Bündel von Wärmetauscherrohren 14 (nur zwei sind teilweise dargestellt) umschließt. Das Wärmetauscherrohr 14 umfaßt ein äußeres Rohr 44, das mit seinem oberen Ende in einer entsprechenden Bohrung der Rohrplatte 16 dicht eingesetzt ist, beispielsweise eingelötet ist, siehe Bezugszahl 47. Dadurch wird der Raum 20 vom Raum 18 gasdicht abgeschlossen und gleichzeitig das äußere Rohr 44 gehalten. Innerhalb des äußeren Rohres 44 ist ein Verdrängungskörper 46 eingeschoben, der das Lumen des äußeinen Rohres 44 über seine im wesentlichen ganze axiale Länge auf einen annähernd ringförmigen Bereich angrenzend zur inneren Wandung des äußeren Rohres 44 verringert, siehe die Bezugszahl 48 in Fig. 5.

Vorzugsweise ist der Verdrängerkörper 46 selbst wiederum ein Rohr, wie Fig. 3 auch erkennen läßt, das aber, damit kein unerwünschter Strömungsnebenschluß sich ergibt, an irgendeiner Stelle seiner Längserstreckung abgedichtet sein muß, beispielsweise an seinem oberen Ende durch Zusammendrücken sich gegenüberliegender Wandteile 50, 52. Durch dieses Breitdrücken vergrößert sich auch die Durchmessererstreckung des Rohres in Richtung der Verquetschung, siehe Bezugszahl 54, wodurch sich eine Art Kopf bildet, mit dem sich das Verdrängungsrohr 46 auf der oberen Stirnkante 56 des äußeren Rohres 44 abstützen kann.

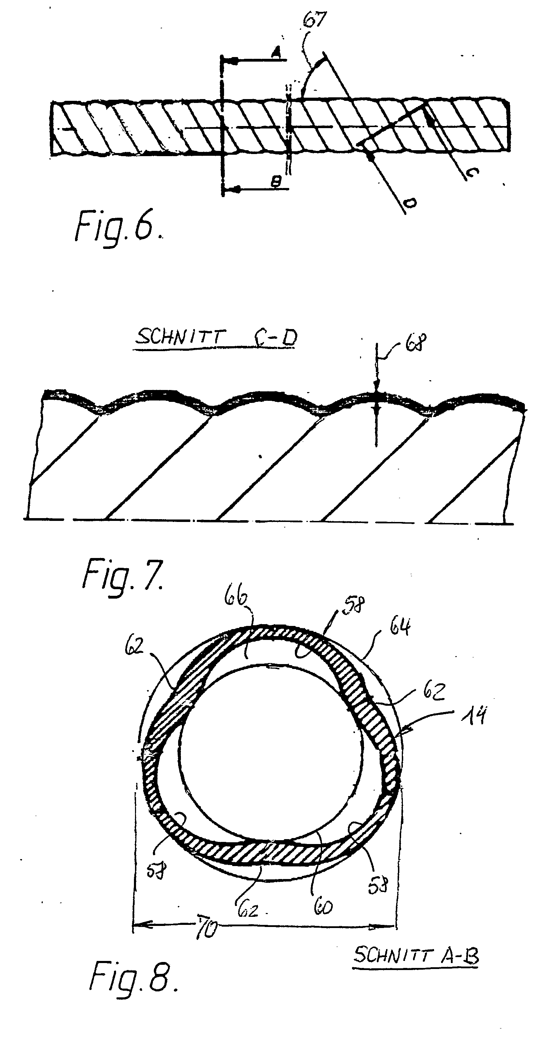

Um zu erreichen, daß der ringförmige Raum 48 über den gesamten Radialumfang der Rohranordnung 44, 46 möglichst gleich groß bleibt, hat es sich als zweckmäßig erwiesen, dem äußeren Rohr 44 (alternativ dem Verdrängerrohr 46) eine bestimmte Oberflächenstruktur zu geben, beispielsweise nach innen weisende Noppen oder in Axialrichtung sich erstreckende Riefen, nicht dargestellt. Besonders günstig ist jedoch eine Oberflächenstruktur für das Wärmetauscherrohr 14 (insbesondere für das äußere Rohr 44), wie sie aus der Fig. 6 sich ergibt: Es handelt sich um eine wendelförmige Oberflächenstruktur, die auch als Drallung bezeichnet werden kann und bei der hier dargestellten Ausführungsform aus drei Ausbeulungen 58 besteht, die radial gleichförmig über den Radialumfang des Wärmetauscherrohres 14 verteilt, also in Winkelabständen von 120° liegen. Statt der Ausbeulung 58 aus einem ursprünglichen Querschnitt, wie er von dem Kreis 60 angedeutet wird, kann auch eine Einbeulung 62 vorgenommen werden, ausgehend von einem größeren ursprünglichen Querschnitt, angedeutet durch den Kreis 64. Diese Ausbeulungen 58 bzw. Einbeulungen 62 verlaufen wendelförmig entlang der axialen Erstreckung des Rohres 14, wie die Fig. 6 erkennen läßt. In der Schnittansicht gemäß Fig. 7, das ist ein Schnitt entlang der Richtung der Wendel, ist die Wandstärke des Rohres 14 im wesentlichen konstant, während sie in der Schnittansicht A-B gemäß Fig. 8 infolge von Verzerrungswirkungen unterschiedlich erscheint.

Durch diese Wendelung entsteht zum einen eine Oberflächenvergrößerung, die, bezogen auf ein glattes Rohr, bis zu 30 % erreichen kann, gleichzeitig bietet sich die Möglichkeit ein Verdrängungsrohr mit einem Außendurchmesser, der etwa dem des Kreises 60 entspricht, in das Rohr 14 einzuschieben und dadurch drei wiederum gleichmäßig über den Radialumfang verteilte Teilbereiche 66 zu schaffen, die dem Kühlmedium bei seinem Durchströmen des Wärmetauscherrohres 14 eine Zentrifugalkraft und Verwirbelung aufdrücken, die eine zusätzliche Sicherheit gegen das Haftenbleiben von Blasen an der Innenwand des Wärmetauscherrohres 14 ergibt.

Versuche haben gezeigt, daß eine Drallung mit einem Winkel 67 von 50 bis 80° zur Rohrachse, wie aus Fig. 6 erkennbar, besonders günstige Ergebnisse liefert.

Die Drallungstiefe soll etwa das 1 bis 3fache der Rohrwandstärke betragen, während das Verhältnis von Rohrwandstärke 68 zu Rohraußendurchmesser 70 im dargestellten Ausführungsbeispiel etwa 1 : 25 beträgt.

**Ansprüche**

1. Rohrbündelwärmetauscher, insbesondere für Drucklufttrockner o. dgl., bestehend aus einem im wesentlichen zylindrischen Gehäuse (12), in dem ein oder mehrere Rohrbündel vorgesehen sind, wobei die Rohrenden der einzelnen Wärmetauscherrohre (14) der Rohrbündel von Halteeinrichtungen (16) umgriffen sind, dadurch gekennzeichnet, daß die Wärmetauscherrohre (14) des einen Rohrbündels (oder, bei mehreren Rohrbündeln, die Wärmetauscherrohre zumindes eines der Rohrbündel) jeweils einen Verdrängerkörper (46) enthalten, der das Lumen des Wärmetauscherrohres (14) über seine im wesentlichen ganze axiale Länge auf einen annähernd ringförmigen Bereich (48) angrenzend zur Rohrinnenfläche oder auf um den Innenumfang des Wärmetauscherrohres (14) annähernd gleichmäßig verteilte Teilbereiche (66) verringert.

2. Rohrbündelwärmetauscher nach Anspruch 1, dadurch gekennzeichnet, daß der Verdrängerkörper (46) von einem Rohr gebildet wird, dessen Außendurchmesser kleiner als der Innendurchmesser des Wärmetauscherrohrs (14) ist, und daß zumindest an einer Stelle des Verdrängerrohres (46) das Lumen des Verdrängerrohres verschlossen ist.

3. Rohrbündelwärmetauscher nach Anspruch 2, wobei die Wärmetauscherrohre (14) im wesentlichen senkrecht angeordnet sind, dadurch gekennzeichnet, daß das Verdrängerrohr (46) an seinem einen (vorzugsweise oberen) Ende durch Breitdrükken verschlossen ist.

4. Rohrbündelwärmetauscher nach Anspruch 3, dadurch gekennzeichnet, daß das breitgedrückte Ende (50, 52) eine Breite (54) aufweist, die größer als der innere Durchmesser des Wärmetauscherrohrs (14) und eine Halterung für das Verdrängerrohr (46) bildet.

5. Rohrbündelwärmetauscher nach einem der Ansprüche 1 bis 4, dadurch gekennzeichnet, daß der Verdrängerkörper und/oder das Wärmetauscherrohr (14) eine noppenartige oder riefenartige Oberflächenstruktur aufweisen.

6. Rohrbündelwärmetauscher nach Anspruch 5, dadurch gekennzeichnet, daß das Wärmetauscherrohr (14) eine gedrallte Oberflächenstruktur aufweist, die die Oberfläche des Wärmetauscherrohrs - bezogen auf ein glattes Rohr - um 10 bis 30 % vergrößert.

7. Rohrbündelwärmetauscher nach Anspruch 6, dadurch gekennzeichnet, daß die Drallung ein inneres Lumen (60) freiläßt, das gerade ausreicht, ein eine glatte Oberfläche aufweisendes Verdrängerrohr (46) entsprechenden Durchmessers einzuschieben.

8. Rohrbündelwärmetauscher nach Anspruch 6 oder 7, dadurch gekennzeichnet, daß die Drallung aus um annähernd 120° versetzte Rohrwandausbeulungen (58) gebildet ist.

9. Rohrbündelwärmetauscher nach Anspruch 7 oder 8, dadurch gekennzeichnet, daß die Drallung aus um annähernd um 120° versetzte Rohrwandeindrückungen (62) gebildet ist.

10. Rohrbündelwärmetauscher nach Anspruch 8 oder 9, dadurch gekennzeichnet, daß die Drallung einen Winkel (67) von 50...80° zur Rohrachse bildet.

11. Rohrbündelwärmetauscher nach Ansprüchen 8 bis 10, dadurch gekennzeichnet, daß die Drallungstiefe etwa das 1 bis 3fache der Rohrwandstärke (68) beträgt.

12. Rohrbündelwärmetauscher nach einem der Ansprüche 8 bis 11, dadurch gekennzeichnet, daß bei Kupfer als Rohrmaterial das Verhältnis von Rohrwandstärke (68) zu Rohraußendurchmesser (70) des gedrallten Rohres zwischen 1 : 10 und 1 : 50, vorzugsweise zwischen 1 : 20 und 1 : 30 liegt.

Fig.1.

EP 0 308 530 A1

*Fig.2.*

EP 0 308 530 A1

Fig.3.

Fig. 4.

Fig.5

**Fig.6.**

**SCHNITT C-D**

**Fig.7.**

**Fig.8.**

**SCHNITT A-B**

Europäisches
Patentamt

**EUROPÄISCHER RECHERCHENBERICHT**

Nummer der Anmeldung

EP 87 11 3948

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 875 578 (DUCHEMIN)<br>* Seite 2, Zeilen 15-26; Figur 3 *<br>--- | 1,2,5 | F 28 F 13/08<br>B 01 D 53/26D |
| X | FR-A- 584 854 (KNISKERN)<br>* Seite 2, Zeilen 1-16,24-33; Figur 2 * | 1,5 | |
| A | --- | 3,4 | |
| A | US-A-1 961 907 (MOTT)<br>* Seite 3, Zeilen 1-31; Figuren 1,6,7,11 *<br>----- | 6-11 | |

| | RECHERCHIERTE SACHGEBIETE (Int. Cl.4) |
|---|---|
| | F 28 D<br>F 28 F<br>B 01 D |

Der vorliegende Recherchenbericht wurde für alle Patentansprüche erstellt

| Recherchenort | Abschlußdatum der Recherche | Prüfer |
|---|---|---|
| DEN HAAG | 17-05-1988 | HOERNELL, L.H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument